# EUROPEAN PATENT SPECIFICATION

(11) **EP 3 747 587 B1**
(45) Date of publication and mention of the grant of the patent: **27.04.2022**
(21) Application number: 19178301.8
(22) Date of filing: 04.06.2019
(51) Int. Cl.: B21J 15/28, B21J 15/32, B23K 9/20, B23K 11/00, B23P 19/00

(54) **FASTENING SYSTEM AND METHOD FOR SENSING THE PRESENCE OF A FASTENER IN A FEEDING TUBE**
BEFESTIGUNGSSYSTEM UND VERFAHREN ZUR ERFASSUNG DER ANWESENHEIT EINES BEFESTIGUNGSELEMENTS IN EINEM ZUFÜHRSCHLAUCH
SYSTÈME DE FIXATION ET PROCÉDÉ DE DÉTECTION DE LA PRÉSENCE D'UN ÉLÉMENT DE FIXATION DANS UN TUBE DE CHARGE

(43) Date of publication of application: 09.12.2020
(73) Proprietor: Newfrey LLC, New Britain, CT 06053 (US)
(72) Inventor: Müller, Dirk, 35394 Gießen (DE); Spieß, Manuel, 35394 Gießen (DE)
(74) Representative: SBD IPAdmin

(56) References cited:
- DE-A1-102010 018 075
- DE-A1-102017 101 705
- DE-C1- 10 035 377
- KR-A- 20060 023 402
- US-B2- 7 109 434

## Description

The present invention relates generally to improvements in automated fastening or joining tools, such as stud welding tools, and specifically to improvements relating to the detection of fasteners in a feeding tube of a joining tool (see for example DE102010018075A1 which forms the basis for the preamble of the independent claims).

In the present context, the terms "fastening" or "joining" are intended to refer to all methods for attaching elements to components, in particular attaching metal or plastic elements to metal or plastic components, for example by adhesive bonding, screwing, by forming, such as riveting, self-piercing riveting, blind riveting of rivets or nuts, clinch riveting, or by the union of materials, such as welding, including short-cycle arc welding or drawn-arc welding. Short-cycle arc welding is frequently referred to as stud welding, even though studs are not the only parts welded in this manner.

Self-piercing rivets and associated tools for fastening two or more pieces of material with respect to one another are generally well-known in the automotive industry. Self-piercing rivets have typically been used in non-critical connections attaching two or more pieces of material with respect to one another, for instance to assemble an automotive body at a framing station using self-piercing rivets.

Stud welding is used primarily, but not exclusively, in automotive production. In this context, metal elements, such as metal studs with and without threads, eyes, nuts, etc., are welded onto the sheet metal or workpiece of a vehicle body. The metal elements then serve as anchors or mounting elements, for example for attaching passenger compartment fittings, lines, wiring and the like, to the body metal. The metal elements may be welding studs that have a shank, and a head somewhat larger in diameter than the stud shank. The head is welded to the workpiece.

Such joining or fastening tools are commonly attached to a movable frame, in particular to a robot and comprise a holding element for holding a fastener destined to be joined to a workpiece, a joining drive element to move the holding element along a joining direction for joining the fastener to the workpiece and a feeder for feeding fasteners to the holding element.

Once a fastener is arranged in the holding element, a conventional fastening or joining method can be carried out. For example, a conventional stud welding process, preferably in the drawn arc method, can be carried out as follow. The fastener is first placed on the workpiece by means of the joining drive element. Then a pre-conduction electric current is switched on, which flows through the fastener and the workpiece. Next, the stud is raised with respect to the component by means of the fastening drive device (linear motor). An electric arc forms. The system then switches to the welding current. The end faces of the fastener and workpiece opposite one another begin to melt as a result of the high welding current. Then the fastener is lowered onto the workpiece again so that the two melts combine. The welding current is switched off upon contact with the component and short-circuiting of the arc, or shortly beforehand. All the molten material solidifies, and the weld connection is established.

Such tools may incorporate a plurality of sensors in order to avoid misfunctions and ensure a correct fastening operation proceeding. For example, a sensor arrangement may be used to determine the stroke of a fastener or to determine the presence or not of a fastener in the holding element or in the feeder.

It is currently known to realize a detection of fasteners in such joining tools through proximity sensors. For instance, a first sensor forms a stud departure sensor and a second sensor forms a stud arrival sensor. The first sensor records when the stud leaves a magazine or a first feeder, wherein the second sensor records the arrival of the sensor in the fastening head or in the holding element. Such proximity sensors are easy to implement. However, they work with a magnetic field change. Such magnetic field change may disturb the joining process (notably in case of arc welding). In addition, such sensors only work with fasteners adapted to be magnetically recognized, and therefore they do not allow all kinds of material to be used for the fasteners.

It is hence an object of the present invention to at least alleviate the aforementioned shortcomings. More particularly one objective of the present invention is to provide a fastening system for joining a fastener to a workpiece which can be used with different kind of fasteners, independently from their material or shape and with different kind of joining technology, without influencing the joining or fastening process.

To this aim, according to the invention, it is provided a fastening system for joining a fastener to a workpiece comprising:
- a head comprising a nose with a receiving element for receiving the fastener destined to be joined to the workpiece,
- a joining drive element to move the receiving element along a joining direction for joining the fastener to the workpiece,
- a feeder for feeding fasteners from a magazine to the receiving element, wherein the feeder comprises a feeding tube adapted to receive fasteners from a magazine and into which the fasteners are driven to the nose by compressed air,
wherein the feeder is provided with a pressure sensor for sensing the pressure of the compressed air flowing through the tube and a microprocessor is provided for processing and computing the pressure to detect the presence or passage of a fastener in the feeding tube.

Such a fastening system is adapted to detect the presence or passage of any type of fastener in the feeding tube, regardless of its material. No magnetic field is created by the pressure sensor; thus, the joining step is not disturbed. The pressure sensor can easily be adapted to pre-existing fastening systems or can be directly integrated in new fastening systems. The data obtained by the pressure sensor can be post treated and used for predictive maintenance. Besides, such a pressure sensor may be used to replace several different sensors usually necessary in such systems, thus reducing the entire weight and the size of the fastening systems, making them more adaptable and compact. In the present disclosure, feeding tube designates the feeding channel which allows the passage of a fastener from a magazine to the nose or receiving element in order to be joined, and in which a compressed air flow is injected to drive the fastener.

According to an embodiment, the feeding tube comprises a segment extending parallel to the head between a first end and a second end, the feeding tube communicating with the nose for the delivery of the fastener at the second end, and wherein the pressure sensor is arranged at the vicinity of the first end. The pressure sensor is easily integrated to new or pre-existing fastening systems.

According to an embodiment, the pressure sensor communicates directly with the feeding tube through a communication channel. The communication channel may be derived or diverted from the feeding tube and thus does not interfere with the fastener's stroke.

According to an embodiment, the sensor is screwed to one end of the communication channel. The sensor is easily integrated. The sensor can also be plugged to the communication channel. Besides, the microprocessor can be integrated to an external plate or board which is itself plugged to the head or to another element of the fastening system. The plate can be arranged in a housing.

According to an embodiment, the sensor is directly integrated in the feeding tube. The sensor does not protrude from the fastening system. A direct integration of the pressure sensor also allows a pre-calibration of the sensor according to the device to which it is integrated. Thus, the pressure sensor is more efficient.

According to an embodiment, a switch is provided to turn the compressed air in the feeder off, and wherein the microprocessor controls the switch for turning off the compressed air, depending on the pressure in the feeding tube. The microprocessor controls the switch.

The present invention is further directed to a method for sensing the presence or the passage of a fastener in a feeder comprising:
- providing a fastening system as described above,
- measuring the pressure of the compressed air flowing through the feeding tube at a reference point and at different times,
- comparing the measured pressure with a predetermined pressure to detect the passage of a fastener in the feeding tube.

The method is easily implemented and provides a direct and definite information regarding the presence or not of the fastener in the feeding tube and thus the passage or not of the fastener in the feeding tube. Thus, depending on the passage of the fastener in the feeding tube, further joining steps can be implemented.

According to an embodiment, a fastener is detected when the pressure measured by the pressure sensor is above a predetermined pressure. For example, the predetermined pressure is a function of the pressure measured at a reference point and at a reference time.

According to an embodiment, a curve of the measured pressure is compared to a reference curve to determine the presence or passage of the fastener. Different models may be pre-recorded depending on the type of fastening system (welding system, bonding system), the type of the fastener, the shape of the fastener, the speed of the fastener in the feeding tube, ... etc.

According to an embodiment, the compressed air is switched off after a predetermined period of time if no fastener is detected in the feeding tube. This provides energy savings.

According to an embodiment, the compressed air is switched off after the detection of the passage or presence of the fastener in the feeding tube. Thus, the compressed air does not influence further the fastening process and is used only to drive the fastener about a determined stroke.

Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, an application-specific integrated circuit (ASIC), a programmable logic array, a field-programmable gate array (FPGA), or the like. A computer or computer system may comprise one or more processors.

Other characteristics and advantages of the invention will readily appear from the following description of embodiments, provided as non-limitative examples, in reference to the accompanying drawings.

In the drawings:
Fig. 1 shows a schematic perspective view of a fastening system, notably a stud welding system comprising a head with a nose and a receiving element for receiving a fastener destined to be joined to a workpiece and a feeder for feeding fasteners, notably isolated fasteners, from a magazine to the nose;
Fig. 2 shows a sectional view of the fastening system of Fig. 1 with a pressure sensor adapted to measure the pressure in a feeding tube of the feeder;
Fig. 3 shows a detail of Fig. 2 with a feeding tube, a pressure sensor and a microprocessor;
Fig. 4 shows a simplified flow chart of a method for sensing the presence or the passage of a fastener in a feeder;
Fig. 5A is an exemplary curve representing the pressure in the feeding tube when a fastener passes through the feeding tube for a particular fastening system and fastener;
Fig. 5B is an exemplary curve representing the pressure measured in the feeding tube when no fastener passes through the feeding tube for the particular fastening system and fastener.

On the different figures, the same reference signs designate identical or similar elements.

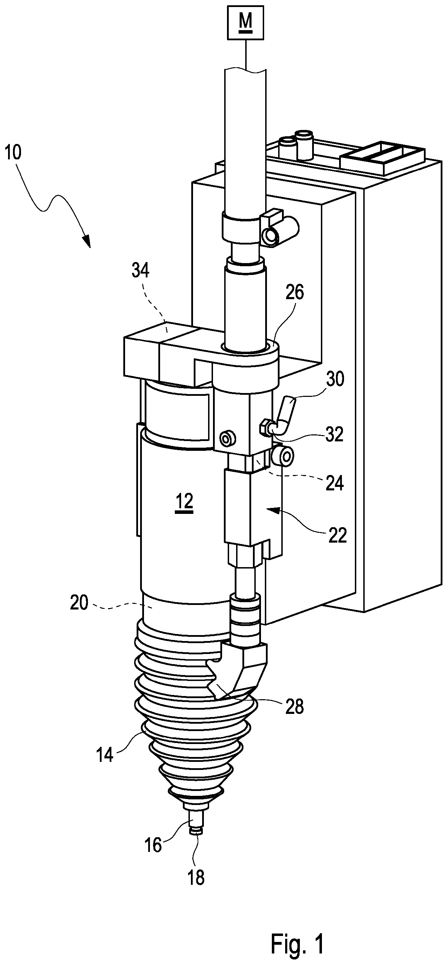

Fig. 1 shows a fastening system 10 according to the invention. The joining system is adapted to be driven by a robot (not represented) with a stationary base from which two arms extend, articulately connected to each other. A flange may be provided at an end of the arm, and the fastening system 10 can be attached to said flange. The fastening system comprises a head 12. The head 12 is provided with a nose 14 with a receiving element 16. The receiving element 16 is for receiving fasteners 18 destined to be joined to the workplace. The fastener is for example a stud, such as a weld stud or a glue stud. In other embodiments, the fastener can be a rivet, a self-piercing rivet, a self-coring rivet, a self-flowing rivet, a blind rivet, a nut, a blind nut, a screw.... Etc. The receiving element 16 is for example a holding element for holding the fastener before and/or during the joining step, notably if the fastener is a weld stud. The receiving element may also be a receiver, notable if the fastener is a rivet. Although the fastening system 10 may be employed for numerous kinds of joining as a matter of design, the fastening system 10 illustrated in Fig. 1 serves more particularly to weld an element, in particular a welding stud, to a workpiece, for example a metal sheet. A conformation of the joining system as a bolt-welding system, or short-time arc-welding system with lift ignition, is especially preferred, without loss of generality.

The fastening system further comprises a joining drive element 20. The joining drive element 20 is adapted to move the receiving element 16 along a joining direction for joining the fastener to the workpiece. A feeder 22 is also provided. The feeder 22 comprises a feeding tube 24 adapted to receive fasteners from a magazine M and into which the fasteners are driven to the nose by compressed air. The feeding tube 24 can have a portion integrated to the head or the nose and a portion extending outside the head or the nose. More particularly, the feeding tube correspond to the channel in which the fastener is driven with compressed air from a magazine to a final position in which the joining drive element is used for the joining process.

For instance, a stationary base station (not represented) can be provided. The stationary base station serves to furnish energy for joining (notably welding) to the head and serves as superordinate control device. The base station may be connected to an individualizing (or isolating) device. The individualizing device serves to individualize fasteners, for instance studs or bolts, as a rule supplied in bulk or a magazine, and convey them to the feeder and the feeding tube. For this purpose, the individualizing device and the feeder as a rule comprises a compressed air unit to convey the fasteners pneumatically.

Lines to carry out the fastening (for instance welding) current, control lines, etc. may further be provided for connecting the fastening system to the base of the robot. By means of the control lines, the motions of the robot can be matched with those of the fastening system.

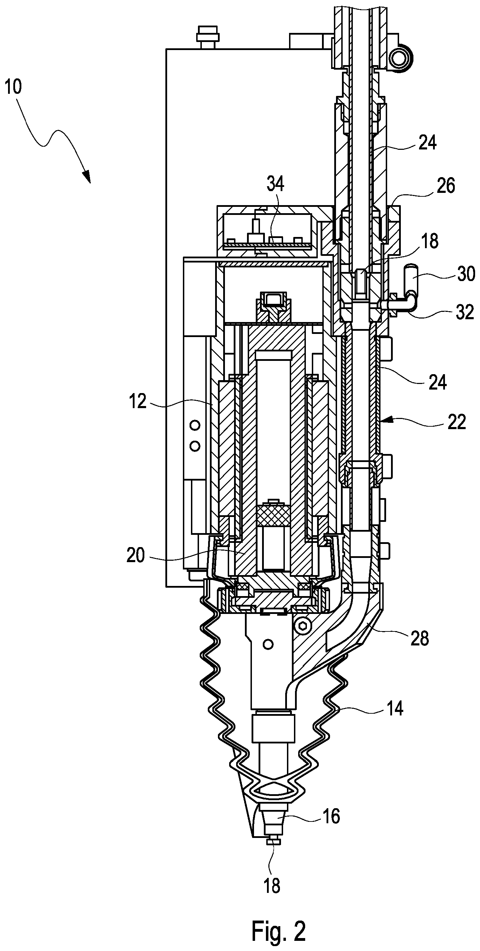

The feeding tube 24, as mentioned above, receives isolated fasteners 18 and each fastener 18 is driven by compressed air from a magazine M to the nose 14 of the head 12, as illustrated in Fig. 1. The feeding tube 24 actually comprises a segment extending parallel to the head between a first end 26 and a second end 28. At the second end 28, the feeding tube 24 communicates with the nose 14 or the receiving element for the passage of the fastener 18 from the feeding tube 24 to the nose 14 or the receiving element. The feeder is provided with a pressure sensor 30 sensing the pressure in the feeding tube 24. The pressure sensor 30 is arranged along the feeding channel at a position (for example P1, P2 - see Fig. 1) allowing a correct measurement of the pressure within the feeding channel. More particularly, the pressure sensor 30 may be arranged in the vicinity of the first end 26 at a position P1, as shown in Fig. 2. Such position P1 allows a unitary measurement and the sensor is easily implemented.

The pressure sensor 30 may also be arranged in the feeding tube in the portion linked to the head, or in the portion outside the head. In the embodiment depicted in Fig. 2, the pressure sensor is arranged in a portion of the feeding tube linked to the head corresponding to the P1 position in Fig. 1. The pressure sensor may also be integrated in the P2 position (see Fig. 1) in the vicinity of the second end. Such position allows a measurement near the receiving element, good measurement results.

The pressure sensor 30 communicates directly with the feeding tube 24, notably through a communication channel 32. The communication channel 32 is diverted from the feeding tube 24, such that the pressure in the communication channel 32 is the same or similar or at least a function of the pressure in the feeding tube 24. The pressure sensor 30 may be fixed (for example screwed) to the communication channel 32. The connections between the pressure sensor 30 and the communication channel and/or the feeding tube are tights.

In another embodiment, the pressure sensor 30 may directly be integrated in the feeding tube 24, such that no protrusion is visible. For example, the feeding tube 24 may comprise a double wall (an inner wall and an external wall, wherein the inner wall faces the fastener) and the pressure sensor 30 is embedded between the inner and external wall.

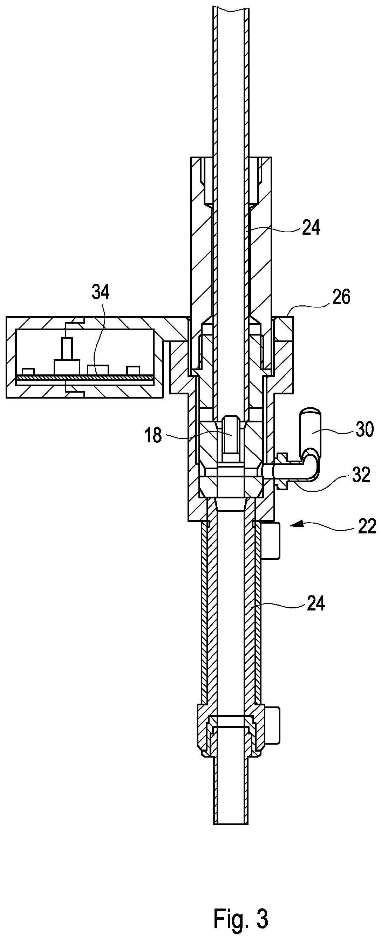

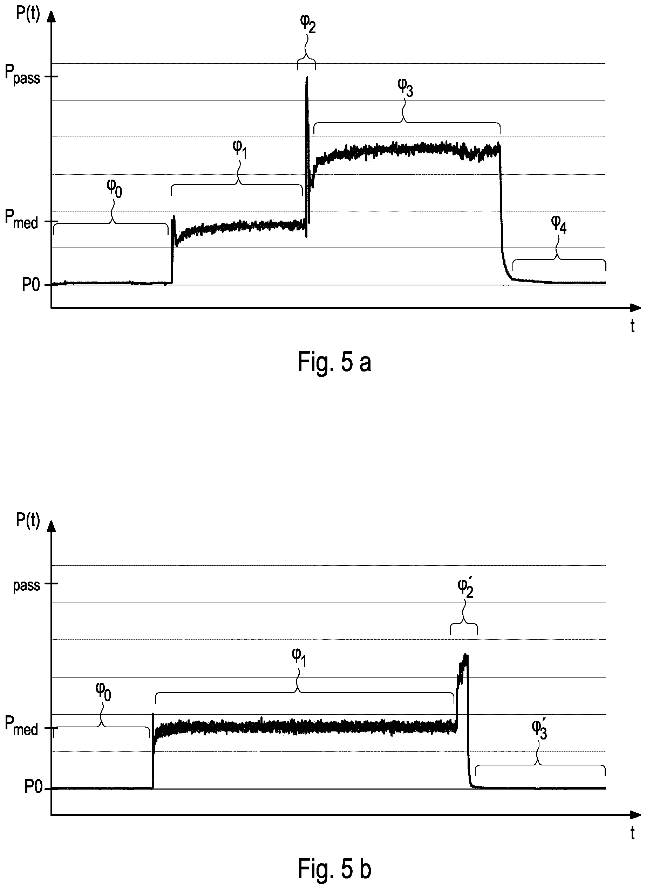

The pressure sensor 30 communicates with a microprocessor 34 (see Fig. 2 or Fig. 3). More particularly, the microprocessor 34 collects the data provided by the pressure sensor 30 and analyses it to identify or detect the presence or passage of a fastener in the. Fig. 5A and Fig. 5B illustrate for example the evolution of the pressure in the feeding tube 24 during the passage of a fastener 18 (see Fig. 5A), or without the presence of a fastener (Fig. 5B). Fig. 5A and Fig. 5B depicted exemplary curves which may be obtained by monitoring the pressure in the feeding tube through a pressure sensor with a specific fastener and a specific fastening system or fastening technology. A non-transitory computer readable storage medium having stored thereon computer readable instructions can be provided. The non-transitory computer readable storage medium, when executed at a computer system, may cause the computer system to perform the following method.

For example, the microprocessor 34 may compare the curve measured by the pressure sensor 30 to a reference curve pre-calibrated and corresponding to the state of the fastening system 10 and the fastener 16. Depending on the shape, speed or type of fastener passing through the feeder and depending on the type of fastening device, the reference curve designing a state with or without fastener in the feeder may differ. Therefore, a plurality of curves may be stored and a calibration may be needed in order to compare the measured curve with the pre-defined curve corresponding to the actual state of the fastening system and the fastener.

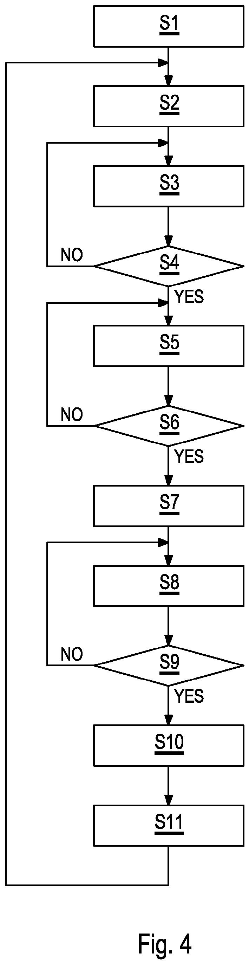

In an alternative or complementary embodiment, the method for sensing the passage or presence of the fastener may comprise the steps depicted in Fig. 4 notably.

In a first step (S1), an initialization is realized. The initialization may for example allow to record which type of fastener, or fastening system is used, or at which speed the fasteners shall pass through the feeding tube. Besides, a pressure of reference P0, corresponding to the absence of compressed air in the feeding tube is set. P0 is notably illustrated in the curves of Fig. 5A and Fig. 5B in correspondence with the phase ϕ0.

Once the initialization phase is over, the measuring may begin (S2 and S3). S2 corresponds to the start step, whereas S3 corresponds to the measurement of the pressure P(t) in the feeding tube. The pressure is measured through the pressure sensor 30 in the feeding tube 24 at a predetermined time. The pressure measured P(t) is compared to the pressure of reference P0. If the pressure measured P(t) is the same than the pressure of reference P0, the measuring phase is re-done.

If the pressure measured P(t) is different from the pressure of reference P0 (S4), then the system checks that this measured pressure P(t) is stable during a certain period of time (S5 and S6). S5 corresponds to the measurement of the pressure P(t) in the feeding tube, whereas S6 corresponds to the test: is P(t) stable for a predetermined time? It is to be understood under "stable" that the measured values do not sensibly differ from the previous measured value. If the measured pressure is stable, then the system determines a medium value Pmed in correspondence to phase ϕ1 in Fig. 5A and 5B (S7).

The pressure is further measured (S8) until it goes beyond a pre-determined passage value Ppass (S9) which can be determined in function of the medium value Pmed. S9 corresponds to the step: does P(t) is above the Ppass value. If the measured pressure is equal or superior to the pre-determined passage value Ppass (phase ϕ2 as illustrated in Fig. 5A), then the system can deduct that a fastener is currently passing through the feeding tube (S10). If the measured pressure is inferior to the pre-determined passage value Ppass (phase ϕ'2 as illustrated in Fig. 5B), then the system can deduct that no fastener is passing through the feeding tube.

Once the system detects that the fastener already passed through the feeding tube (phase ϕ3 in Fig. 5A), the microprocessor can send a command to switch off the compressed air (phase ϕ4 - S11). Similarly, if the system determines after a predetermined period of time that no fastener has passed through the feeding tube, the microprocessor can send a command to switch off the compressed air (phase ϕ'4) and eventually send a warning that a failure happened.

Of course, the determination of the presence of a fastener may also be made by combining the two methods, in particular by combining a curve comparison and monitoring when the measured pressure goes above a pre-determined reference pressure. Besides, in an alternative or complementary embodiment, the method for sensing the passage or presence of the fastener may comprise a step of derivation of the measured pressure signal.

The fastening system may also be provided with further sensors, for instance a stud departure sensor may also be arranged at the first end of the feeding tube, and upstream the pressure sensor.

Besides, the pressure sensor as described above may be used for determining other operating data which can be used for predictive maintenance or for operating adjustments. More particularly, the pressure sensor may also be used to determine the feeding tube wear and the eventual necessity to replace it. Such sensor may also be used to check the compressed air line and injectors.

## Claims

1. Fastening system (10) for joining a fastener (18) to a workpiece comprising:
- a head (12) comprising a nose (14) with a receiving element (16) for receiving the fastener destined to be joined to the workpiece,
- a joining drive element (20) to move the receiving element (16) along a joining direction for joining the fastener (18) to the workpiece,
- a feeder (22) for feeding fasteners from a magazine to the receiving element, wherein the feeder comprises a feeding tube (24) adapted to receive fasteners from a magazine and into which the fasteners (18) are driven to the nose (14) by compressed air,
**characterized in that**
- the feeder (22) is provided with a pressure sensor for sensing the pressure of compressed air flowing through the feeding tube and a microprocessor is provided for processing and computing the pressure to detect the presence or passage of a fastener in the feeding tube (24).

2. Fastening system (10) according to claim 1, wherein the pressure sensor (30) communicates directly with the feeding tube (24) through a communication channel.

3. Fastening system (10) according to claim 2, wherein the communication channel (32) is diverted from the feeding tube (24) and the pressure sensor (30) is fixed to the communication channel (32).

4. Fastening system (10) according to claim 2 or 3, wherein the pressure sensor (30) is screwed to one end of the communication channel (32).

5. Fastening system (10) according to claim 1, wherein the pressure sensor (30) is directly integrated in the feeding tube (24).

6. Fastening system (10) according to any of claims 1 to 5, wherein a switch is provided to turn the compressed air in the feeder (22) off, and wherein the microprocessor controls the switch for turning off the compressed air, depending on the pressure in the feeding tube (24).

7. Fastening system (10) according to any of claims 1 to 6, wherein the feeding tube (24) comprises a segment extending parallel to the head between a first end and a second end, the feeding tube (24) communicating with the nose (14) for the delivery of the fastener at the second end, and wherein the pressure sensor is arranged in a first position (P1) the vicinity of the first end.

8. Fastening system (10) according to any of claims 1 to 6, wherein the feeding tube (24) comprises a segment extending parallel to the head between a first end and a second end, the feeding tube (24) communicating with the nose for the delivery of the fastener at the second end, and wherein the pressure sensor is arranged in a second portion (P2) in the vicinity of the second end.

9. Method for sensing the presence of a fastener (18) in a feeder **characterized by** comprising:
- providing a fastening system (10) according to any of claims 1 to 8,
- measuring the pressure of the compressed air flowing through the feeding tube (24) at a reference point and at different times,
- comparing the measured pressure with a predetermined pressure to detect the passage of a fastener in the feeding tube (24).

10. Method according to claim 9, wherein a fastener (18) is detected when the pressure measured by the pressure sensor (30) is above a predetermined pressure, wherein the predetermined pressure is function of the pressure measured at a reference point and at a reference time.

11. Method according to claim 9 or claim 10, wherein a curve of the measured pressure is compared to a reference curve to determine the presence or passage of the fastener (18).

12. Method according to any of claims 9 to 11, wherein the compressed air is switched off after a predetermined period of time if no fastener (18) is detected in the feeding tube (24).

13. Method according to any of claims 9 to 12, wherein the compressed air is switched off after the detection of the passage or presence of the fastener (18) in the feeding tube (24).

## Patentansprüche

1. Befestigungssystem (10) zum Anbringen eines Befestigungsmittels (18) an einem Werkstück, umfassend:
- einen Kopf (12), der eine Nase (14) mit einem Aufnahmeelement (16) zum Aufnehmen des Befestigungsmittels umfasst, das an dem Werkstück angebracht werden soll,
- ein Anbringungsantriebselement (20), um das Aufnahmeelement (16) entlang einer Anbringungsrichtung zum Anbringen des Befestigungsmittels (18) an dem Werkstück zu bewegen,
- einen Zulieferer (22) zum Zuliefern von Befestigungsmitteln von einem Magazin zu dem Aufnahmeelement, wobei der Zulieferer ein Zulieferrohr (24) umfasst, das angepasst ist, Befestigungsmittel von einem Magazin aufzunehmen und in den die Befestigungsmittel (18) durch Druckluft zu der Nase (14) getrieben werden,
**dadurch gekennzeichnet, dass**
- der Zulieferer (22) mit einem Drucksensor bereitgestellt ist, um den Druck von Druckluft, die durch das Zulieferrohr strömt, zu erfassen, und ein Mikroprozessor zum Verarbeiten und Berechnen des Drucks bereitgestellt ist, um das Vorhandensein oder den Durchgang eines Befestigungsmittels in dem Zulieferrohr (24) zu detektieren.

2. Befestigungssystem (10) nach Anspruch 1, wobei der Drucksensor (30) direkt mit dem Zulieferrohr (24) durch einen Kommunikationskanal kommuniziert.

3. Befestigungssystem (10) nach Anspruch 2, wobei der Kommunikationskanal (32) von dem Zulieferrohr (24) geteilt wird und der Drucksensor (30) an dem Kommunikationskanal (32) fixiert ist.

4. Befestigungssystem (10) nach Anspruch 2 oder 3, wobei der Drucksensor (30) an ein Ende des Kommunikationskanals (32) geschraubt ist.

5. Befestigungssystem (10) nach Anspruch 1, wobei der Drucksensor (30) direkt in das Zulieferrohr (24) integriert ist.

6. Befestigungssystem (10) nach einem der Ansprüche 1 bis 5, wobei ein Schalter bereitgestellt ist, um die Druckluft in dem Zulieferer (22) abzuschalten, und wobei der Mikroprozessor den Schalter zum Abschalten der Druckluft abhängig von dem Druck in dem Zulieferrohr (24) steuert.

7. Befestigungssystem (10) nach einem der Ansprüche 1 bis 6, wobei das Zulieferrohr (24) ein Segment umfasst, das sich parallel zu dem Kopf zwischen einem ersten Ende und einem zweiten Ende erstreckt, das Zulieferrohr (24) mit der Nase (14) für die Abgabe des Befestigungsmittels an dem zweiten Ende kommuniziert, und wobei der Drucksensor in einer ersten Position (P1) nahe dem ersten Ende eingerichtet ist.

8. Befestigungssystem (10) nach einem der Ansprüche 1 bis 6, wobei das Zulieferrohr (24) ein Segment umfasst, das sich parallel zu dem Kopf zwischen einem ersten Ende und einem zweiten Ende erstreckt, das Zulieferrohr (24) mit der Nase für die Abgabe des Befestigungsmittels bei dem zweiten Ende kommuniziert und wobei der Drucksensor in einem zweiten Abschnitt (P2) nahe dem zweiten Ende eingerichtet ist.

9. Verfahren zum Erfassen des Vorhandenseins eines Befestigungsmittels (18) in einem Zulieferer, **dadurch gekennzeichnet, dass** es Folgendes umfasst:
- Bereitstellen eines Befestigungssystems (10) nach einem der Ansprüche 1 bis 8,
- Messen des Drucks der Druckluft, die durch das Zulieferrohr (24) strömt, bei einem Referenzpunkt und zu unterschiedlichen Zeiten,
- Vergleichen des gemessenen Drucks mit einem vorgegebenen Druck, um den Durchgang eines Befestigungsmittels in dem Zulieferrohr (24) zu detektieren.

10. Verfahren nach Anspruch 9, wobei ein Befestigungsmittel (18) detektiert wird, wenn der von dem Drucksensor (30) gemessene Druck über einem vorgegebenen Druck liegt, wobei der vorgegebene Druck von dem Druck abhängig ist, der bei einem Referenzpunkt und zu einer Referenzzeit gemessen wird.

11. Verfahren nach Anspruch 9 oder Anspruch 10, wobei eine Kurve des gemessenen Drucks mit einer Referenzkurve verglichen wird, um das Vorhandensein oder den Durchgang des Befestigungsmittels (18) zu ermitteln.

12. Verfahren nach einem der Ansprüche 9 bis 11, wobei die Druckluft nach einer vorgegebenen Zeitdauer abgeschaltet wird, wenn kein Befestigungsmittel (18) in dem Zulieferrohr (24) detektiert wird.

13. Verfahren nach einem der Ansprüche 9 bis 12, wobei die Druckluft nach der Detektion des Durchgangs oder Vorhandenseins des Befestigungsmittels (18) in dem Zulieferrohr (24) abgeschaltet wird.

## Revendications

1. Système de fixation (10) pour joindre un élément de fixation (18) à une pièce de travail comprenant :
- une tête (12) comprenant un nez (14) avec un élément de réception (16) pour recevoir l'élément de fixation destiné à être joint à la pièce de travail,
- un élément d'entraînement de jonction (20) pour déplacer l'élément de réception (16) le long d'une direction de jonction pour joindre l'élément de fixation (18) à la pièce de travail,
- un dispositif d'alimentation (22) pour alimenter des éléments de fixation à partir d'un chargeur vers l'élément de réception, dans lequel le dispositif d'alimentation comprend un tube d'alimentation (24) conçu pour recevoir des éléments de fixation à partir d'un chargeur et dans lequel les éléments de fixation (18) sont entraînés vers le nez (14) par de l'air comprimé,
**caractérisé en ce que**
- le dispositif d'alimentation (22) est pourvu d'un détecteur de pression pour détecter la pression d'air comprimé s'écoulant à travers le tube d'alimentation et un microprocesseur est fourni pour traiter et calculer la pression pour déceler la présence ou le passage d'un élément de fixation dans le tube d'alimentation (24).

2. Système de fixation (10) selon la revendication 1, dans lequel le détecteur de pression (30) communique directement avec le tube d'alimentation (24) par l'intermédiaire d'un canal de communication.

3. Système de fixation (10) selon la revendication 2, dans lequel le canal de communication (32) est dévié du tube d'alimentation (24) et le détecteur de pression (30) est fixé au canal de communication (32).

4. Système de fixation (10) selon la revendication 2 ou 3, dans lequel le détecteur de pression (30) est vissé à une extrémité du canal de communication (32).

5. Système de fixation (10) selon la revendication 1, dans lequel le détecteur de pression (30) est directement intégré dans le tube d'alimentation (24).

6. Système de fixation (10) selon l'une quelconque des revendications 1 à 5, dans lequel un commutateur est fourni pour couper l'air comprimé dans le dispositif d'alimentation (22), et dans lequel le microprocesseur commande le commutateur pour couper l'air comprimé, en fonction de la pression dans le tube d'alimentation (24).

7. Système de fixation (10) selon l'une quelconque des revendications 1 à 6, dans lequel le tube d'alimentation (24) comprend un segment s'étendant parallèle à la tête entre une première extrémité et une deuxième extrémité, le tube d'alimentation (24) communiquant avec le nez (14) pour la distribution de l'élément de fixation au niveau de la deuxième extrémité, et dans lequel le détecteur de pression est agencé dans une première position (P1) à proximité de la première extrémité.

8. Système de fixation (10) selon l'une quelconque des revendications 1 à 6, dans lequel le tube d'alimentation (24) comprend un segment s'étendant parallèle à la tête entre une première extrémité et une deuxième extrémité, le tube d'alimentation (24) communiquant avec le nez pour la distribution de l'élément de fixation au niveau de la deuxième extrémité, et dans lequel le détecteur de pression est agencé dans une deuxième partie (P2) à proximité de la deuxième extrémité.

9. Procédé pour déceler la présence d'un élément de fixation (18) dans un dispositif d'alimentation **caractérisé en ce qu'**il comprend :
- la fourniture d'un système de fixation (10) selon l'une quelconque des revendications 1 à 8,
- la mesure de la pression de l'air comprimé s'écoulant à travers le tube d'alimentation (24) au niveau d'un point de référence et à des moments différents,
- la comparaison de la pression mesurée à une pression prédéterminée pour déceler le passage d'un élément de fixation dans le tube d'alimentation (24).

10. Procédé selon la revendication 9, dans lequel un élément de fixation (18) est décelé lorsque la pression mesurée par le détecteur de pression (30) est supérieure à une pression prédéterminée, dans lequel la pression prédéterminée est fonction de la pression mesurée au niveau d'un point de référence et à un moment de référence.

11. Procédé selon la revendication 9 ou la revendication 10, dans lequel une courbe de la pression mesurée est comparée à une courbe de référence pour déterminer la présence ou le passage de l'élément de fixation (18).

12. Procédé selon l'une quelconque des revendications 9 à 11, dans lequel l'air comprimé est coupé après une période de temps prédéterminée si aucun élément de fixation (18) n'est décelé dans le tube d'alimentation (24).

13. Procédé selon l'une quelconque des revendications 9 à 12, dans lequel l'air comprimé est coupé après avoir décelé le passage ou la présence de l'élément de fixation (18) dans le tube d'alimentation (24).
